# EUROPEAN PATENT APPLICATION

(11) **EP 3 461 678 A1**
(43) Date of publication of application: **03.04.2019**
(21) Application number: 18189156.5
(22) Date of filing: 15.08.2018
(51) Int. Cl.: B60L 50/50, B60L 15/20, B60L 3/00, B60K 1/02, B60W 10/08, H02M 1/32

(54) **CONTROL OF DISTRIBUTION OF POWER BETWEEN FIRST AND SECOND PROPULSION MOTOR FOR AN ELECTRIC VEHICLE**

(30) Priority: 02.10.2017 JP 2017192573
(71) Applicant: TOYOTA JIDOSHA KABUSHIKI KAISHA, Toyota-shi, Aichi-ken, 471-8571 (JP)
(72) Inventor: IWATA, Shuichi, Aichi-ken, 471-8571 (JP); JOJIMA, Yuki, Aichi-ken, 471-8571 (JP)
(74) Representative: D Young & Co LLP

(57) **Abstract**

An electric vehicle includes a first motor (7a), second motor (7b), direct-current power supply (3), boost converter (10), and controller (8). The boost converter (10) is connected between the direct-current power supply (3) and the first motor (7a), and raises the output voltage of the direct-current power supply (3). The second motor (7b) is driven with electric power of the direct-current power supply (3) without raising the output voltage of the direct-current power supply (3). The controller (8) adjusts output proportions of the first motor (7a) and the second motor (7b). The controller (8) reduces the output proportion of the first motor (7a), when input power to the boost converter (10) exceeds a first power threshold value, as compared with a case where it is smaller than the first power threshold value.

## Description

### BACKGROUND OF THE INVENTION

### 1. Field of the Invention

Technologies disclosed in this specification relate to electric vehicles each including two motors (a first motor and a second motor) for propelling the vehicle. The electric vehicles mentioned in this specification include a hybrid vehicle having both a motor and an engine, and a vehicle using a fuel cell as a power supply.

### 2. Description of Related Art

Electric vehicles each including two motors for propelling the vehicle are known. For example, each of electric vehicles described in Japanese Unexamined Patent Application Publication No. 2016-010298 (JP 2016-010298 A) and Japanese Unexamined Patent Application Publication No. 2004-260904 (JP 2004-260904 A) includes a motor (front motor) that drives front wheels, and a motor (rear motor) that drives rear wheels. A boost converter is connected between the front motor and a battery, and the front motor is driven at a higher voltage than the output voltage of the battery. The rear motor uses electric power of the battery without raising the voltage thereof. In the electric vehicle of JP 2016-010298 A, when electrical leakage is detected in the rear motor, the rear motor is stopped, and the vehicle travels only with the front motor. In the electric vehicle of JP 2004-260904 A, the front motor and the rear motor are driven when large output power is needed, such as when the vehicle is started.

### SUMMARY OF THE INVENTION

The boost converter generates a large quantity of heat, and is likely to be overheated when a load is large. Where an electric vehicle includes a first motor that is driven with power of a direct-current power supply with its voltage raised, and a second motor that is driven with power of the direct-current power supply without raising its voltage, there is some room for improvement in the manner of using the first motor and the second motor, for prevention of overheating of the boost converter.

An electric vehicle disclosed in this specification includes a first motor for propelling the electric vehicle, a second motor for propelling the electric vehicle, a direct-current power supply, and a controller. The boost converter is connected between the direct-current power supply and the first motor, and raises an output voltage of the direct-current power supply. The second motor is driven with electric power of the direct-current power supply without raising the output voltage of the direct-current power supply. The controller adjusts a first output proportion of the first motor and a second output proportion of the second motor. The controller reduces the first output proportion of the first motor when a load index representing a load of the boost converter exceeds a predetermined threshold value, as compared with the case where the load index is smaller than the threshold value.

Reducing the output proportion of the first motor causes the output proportion of the second motor to increase accordingly. As the load of the boost converter increases, this electric vehicle reduces the output proportion of the first motor. As a result, the load of the boost converter can be reduced, and overheating of the boost converter can be prevented.

The load index may be one of an input power to the boost converter, an input current to the boost converter, and a temperature of a given component that constitutes the boost converter. The given component may be, for example, a reactor, or a switching device or devices for raising the voltage.

The controller may be configured to determine the first output proportion and the second output proportion which minimize a power loss, from a target total output of the first motor and the second motor, and then adjust the first output proportion and the second output proportion according to the load index.

The controller initially determines the output proportions of the first and second motors in terms of the power loss, before adjusting the output proportions based on the load index of the boost converter. The controller then adjusts the output proportions, so as to prevent the load of the boost converter from being excessively large. In this manner, it is possible to both avoid overheating of the boost converter, and reduce the power loss.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram of an electric power system of an electric vehicle of embodiments;
FIG. 2 is a flowchart of an output proportion adjusting routine according to a first embodiment;
FIG. 3 is a flowchart of an output proportion adjusting routine according to a second embodiment;
FIG. 4 is a flowchart of an output proportion adjusting routine according to a third embodiment;
FIG. 5 is a flowchart of an output proportion adjusting routine according to a fourth embodiment;
FIG. 6 is a flowchart of an output proportion adjusting routine according to a fifth embodiment;
FIG. 7 is one example of a loss map of motors; and
FIG. 8 is a flowchart of an output proportion adjusting routine according to a sixth embodiment.

### DETAILED DESCRIPTION OF EMBODIMENTS

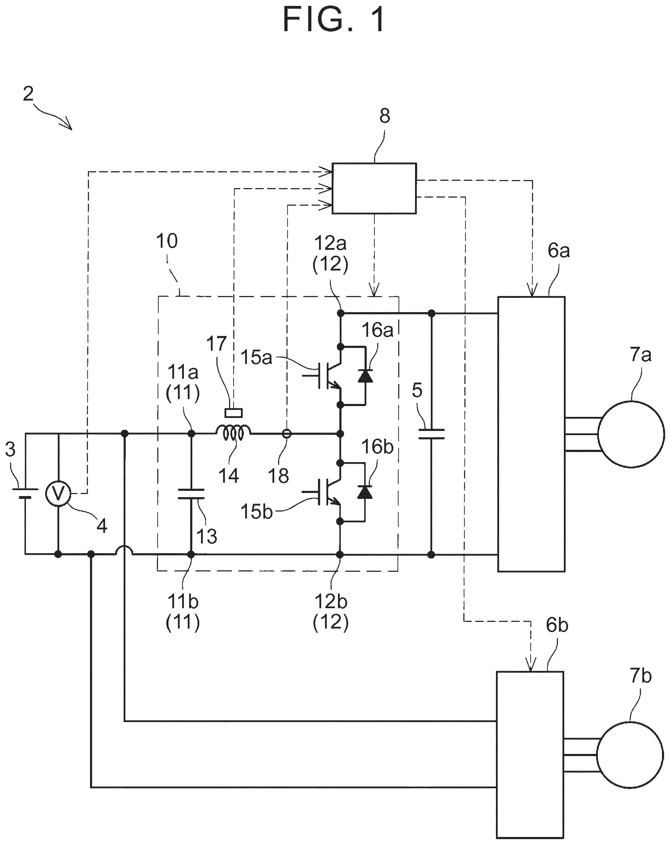

An electric vehicle 2 of a first embodiment will be described with reference to the drawings. FIG. 1 is a block diagram of an electric power system of the electric vehicle 2. The electric vehicle 2 of this embodiment includes two motors (a first motor 7a and a second motor 7b) for propelling the vehicle 2. The first motor 7a and the second motor 7b are three-phase alternating-current (AC) motors. The first motor 7a drives front wheels, and the second motor 7b drives rear wheels.

The electric vehicle 2 includes a battery 3, boost converter 10, first inverter 6a, second inverter 6b, and controller 8, in addition to the first motor 7a and the second motor 7b. The first inverter 6a is connected to the first motor 7a, and the second inverter 6b is connected to the second motor 7b. The first inverter 6a and the second inverter 6b convert direct-current (DC) power into alternating-current (AC) power, and supply the AC power to the first motor 7a and the second motor 7b, respectively.

The maximum drive voltage of the first motor 7a is higher than the output voltage of the battery 3. Thus, the boost converter 10 is connected between the battery 3 and the first inverter 6a. The boost converter 10 raises the output voltage of the battery 3, and supplies it to the first inverter 6a.

The maximum drive voltage of the second motor 7b is equal to the output voltage of the battery 3. Thus, the battery 3 is directly connected to the second inverter 6b. Namely, the second motor 7b uses electric power of the battery 3 without raising its voltage.

The first motor 7a and the second motor 7b generate electric power by using inertial force of the vehicle, when the driver steps on the brake pedal. The power thus generated will be called "regenerative power". The first inverter 6a also has a function of converting alternating-current (AC) regenerative power generated by the first motor 7a, into DC power, and delivering the DC power to the boost converter 10. The boost converter 10 also has a step-down function of stepping down the direct-current (DC) regenerative power received from the first inverter 6a, and delivering the resulting power to the battery 3. The boost converter 10 has both the boosting function of raising the voltage and delivering it from the battery side to the inverter side, and the step-down function of reducing the voltage and delivering it from the inverter side to the battery side. Although the boost converter 10 is a so-called bi-directional DC-DC converter, the device labelled with reference numeral 10 is called "boost converter" since the boosting function is mainly focused on in this specification.

The second inverter 6b also has a function of converting the AC regenerative power generated by the second motor 7b into DC power, and delivering the DC power to the battery 3. The battery 3 is charged with the regenerative power. The first inverter 6a and the second inverter 6b convert direct current into alternating current, or convert alternating current into direct current, by using a plurality of switching devices. The switching devices of the first inverter 6a and second inverter 6b are controlled by the controller 8. The structure and operation of the inverters are widely known in the art, and therefore, will not be described in detail.

A circuit of the boost converter 10 will be described. A terminal of the boost converter 10 on the battery side will be called "input terminal 11", and a terminal of the boost converter 10 on the inverter side will be called "output terminal 12". The positive side and negative side of the input terminal 11 will be referred to as "input positive terminal 11a" and "input negative terminal 11b", respectively. The positive side and negative side of the output terminal 12 will be referred to as "output positive terminal 12a" and "output negative terminal 12b", respectively. Since the boost converter 10 is the bi-directional DC-DC converter, as described above, electric power may flow from the inverter side to the battery side; however, the boosting function is focused on in this specification, and thus the input terminal and the output terminal are defined as described above.

The boost converter 10 includes a capacitor 13, reactor 14, two switching devices 15a, 15b, and two diodes 16a, 16b. The two switching devices 15a, 15b are connected in series. The high-potential side of the series-connected switching devices 15a, 15b is connected to the output positive terminal 12a, and the low-potential side is connected to the output negative terminal 12b. The output negative terminal 12b is directly connected to the input negative terminal 11b. The switching devices 15a, 15b are used for power conversion and called "power transistors", and are typically insulated gate bipolar transistors (IGBTs). The diode 16a is connected in inverse parallel to the switching device 15a, and the diode 16b is connected in inverse parallel to the switching device 15b.

The reactor 14 is connected between a midpoint of the series-connected two switching devices 15a, 15b, and the input positive terminal 11a. The capacitor 13 is connected between the input positive terminal 11a and the input negative terminal 11b.

The switching device 15a closer to the output positive terminal 12a is involved in step-down operation to reduce the voltage, and the switching device 15b closer to the output negative terminal 12b is involved in boosting operation to increase the voltage. The two switching devices 15a, 15b are controlled by the controller 8. The controller 8 determines the duty ratio of a drive signal (pulse width modulation (PWM) signal) to be sent to each switching device 15a, 15b, based on a target voltage ratio between the input terminal 11 and the output terminal 12. The controller 8 produces a complementary drive signal (PWM signal) based on the determined duty ratio, and transmits it to each of the switching devices 15a, 15b. When the complementary drive signals are applied to the switching device 15a involved in the boosting operation and the switching device 15b involved in the step-down operation, voltage increase and voltage reduction are passively switched, due to an electric power balance between the input terminal 11 and the output terminal 12. When the first inverter 6a operates to drive the first motor 7a, the voltage of the output terminal 12 drops, so that the power of the battery 3 is fed to the output terminal 12 with its voltage increased. When the first motor 7a generates regenerative power, and the first inverter 6a delivers the regenerative power to the boost converter side, the voltage of the output terminal 12 rises, so that the regenerative power is fed to the input terminal 11 with its voltage reduced.

The boost converter 10 further includes a temperature sensor 17 and a current sensor 18. The temperature sensor 17 measures the temperature of the reactor 14. The current sensor 18 measures a current flowing through the reactor 14. Measurement data of the temperature sensor 17 and the current sensor 18 is sent to the controller 8. In FIG. 1, broken-line arrows indicate signal lines. The electric vehicle 2 also includes a voltage sensor 4 that measures the output voltage of the battery 3, and measurement data of the voltage sensor 4 is also sent to the controller 8. Although not illustrated in the drawings, the electric vehicle 2 includes a voltage sensor that measures the voltage of the output terminal 12 of the boost converter 10, and current sensors that measure three-phase alternating currents delivered by the respective inverters 6a, 6b. Measurement data of these sensors is also sent to the controller 8.

The controller 8 receives a command of a target total output of the first motor 7a and the second motor 7b, from a high-order controller (not shown), and controls the switching devices of the boost converter 10, inverter 6a, and inverter 6b, so that the sum of the outputs of the first motor 7a and the second motor 7b matches the target total output. In FIG. 1, broken-line arrows directed from the controller 8 to the boost converter 10, inverter 6a, and inverter 6b indicate signal lines through which commands are transmitted to the switching devices. The high-order controller determines the target total output, from the amount of accelerator operation by the driver and the vehicle speed, and sends the target total output to the controller 8. As the driver frequently changes the accelerator operation amount, the target total output also changes frequently. In the meantime, the reactor 14 of the boost converter 10 is a component that is likely to generate heat, and may be overheated if an excessive load is applied to the boost converter 10 for a long period of time. The controller 8 adjusts input electric power to the boost converter 10, while distributing the target total output to the first motor 7a and the second motor 7b, so as to prevent the boost converter 10 from overheating, while dealing with change of the target total output.

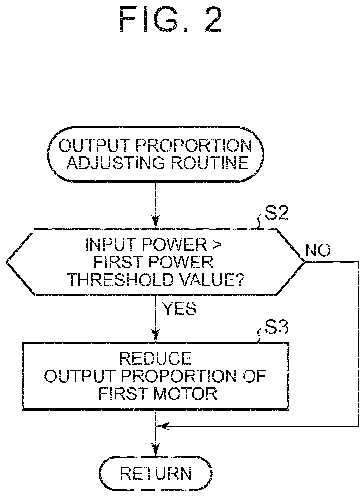

In the first embodiment, overheating of the boost converter 10 is prevented, according to an output proportion adjusting routine for adjusting the output proportions of the first motor 7a and the second motor 7b. FIG. 2 shows a flowchart of the output proportion adjusting routine. Apart from the routine of FIG. 2, the controller 8 distributes the target total output received from the high-order controller, to target output values of the first motor 7a and the second motor 7b, in an appropriate manner. The controller 8 determines the output proportions of the first motor 7a and the second motor 7b, so that the sum of the outputs of the first motor 7a and the second motor 7b matches the target total output, and then executes the routine of FIG. 2. The target output of the first motor 7a is obtained by multiplying the target total output by the output proportion of the first motor 7a, and the target output of the second motor 7b is obtained by multiplying the target total output by the output proportion of the second motor 7b.

The controller 8 monitors the input power to the boost converter 10, based on the measurement data of the voltage sensor 4 and the current sensor 18. The controller 8 compares the input power to the boost converter 10 with a predetermined first power threshold value (step S2). When the input power exceeds the first power threshold value (step S2: YES), the controller 8 reduces the output proportion of the first motor 7a (step S3). When the routine of FIG. 2 ends, the controller 8 controls the boost converter 10, first inverter 6a, and second inverter 6b, so as to achieve the determined output proportions.

Reducing the output proportion of the first motor 7a is equivalent to increasing the output proportion of the second motor 7b. With the output proportion of the first motor 7a thus reduced, the input power to the boost converter 10 is reduced, and overheating of the boost converter 10 is prevented. The controller 8 regularly executes the routine of FIG. 2, and controls the boost converter 10 and the inverters 6a, 6b, so that the input power to the boost converter 10 does not exceed the first power threshold value at any time.

To reduce the output proportion of the first motor 7a, the frequency of the output alternating current of the first inverter 6a may be reduced. Then, the output torque of the first motor 7a is reduced, and the load of the second motor 7b is increased. The second motor 7b increases its output, so as to keep rotating at the frequency of the output alternating current of the second inverter 6b against the load, and the output proportion of the first motor 7a is reduced. Alternatively, the frequency of the output alternating current of the second inverter 6b may be increased, so that the output proportion of the first motor 7a is reduced. Further, the boosting ratio of the boost converter 10 may be reduced, so that the output proportion of the first motor 7a is eventually reduced.

The first power threshold value is set to a power level that does not cause overheating of the boost converter 10. The first power threshold value is determined in advance by experiment or simulation, and is stored in the controller 8.

A second embodiment through a sixth embodiment will be described. In any of these embodiments, the hardware configuration of the electric vehicle is identical with that of the electric vehicle 2 shown in FIG. 1. These embodiments are different only in terms of the routine executed by the controller 8 for adjusting the output proportions of motors.

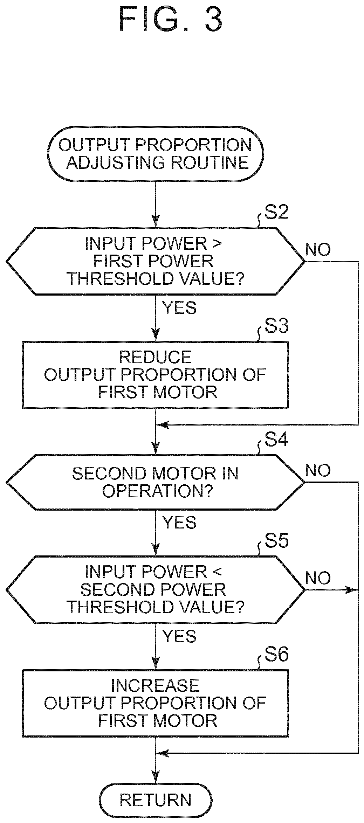

Next, the second embodiment will be described. FIG. 3 shows a flowchart of an output proportion adjusting routine executed by an electric vehicle (electric vehicle 2) of the second embodiment. Steps S2, S3 of the flowchart of FIG. 3 are identical with steps S2, S3 (FIG. 2) of the first embodiment. Namely, when the input power to the boost converter 10 exceeds the first power threshold value (step S2: YES), the controller 8 reduces the output proportion of the first motor 7a (step S3).

Then, when the second motor 7b is in operation (step S4: YES), the controller 8 executes step S5. In step S5, the controller 8 compares the input power to the boost converter 10 with a predetermined second power threshold value. The second power threshold value is set to a lower value than the first power threshold value. When the input power is smaller than the second power threshold value (step S5: YES), the controller 8 increases the output proportion of the first motor 7a (step S6). The controller 8 can increase the output proportion of the first motor 7a, by raising the frequency of the output alternating current of the first inverter 6a. Increasing the output proportion of the first motor 7a is equivalent to reducing the output proportion of the second motor 7b. Even when the output proportion of the first motor 7a is reduced through the operation of step S3, the output proportion of the first motor 7a can be resumed through the operation of step S5. The routine of FIG. 3 is useful when a power loss is smaller in the first motor 7a, than that in the second motor 7b. The second power threshold value is set to be smaller than the first power threshold value, for prevention of hunting in adjustment of the motor output proportions.

The controller 8 can also increase the output proportion of the first motor 7a, by dropping the frequency of the output alternating current of the second inverter 6b, or increasing the boosting ratio of the boost converter 10.

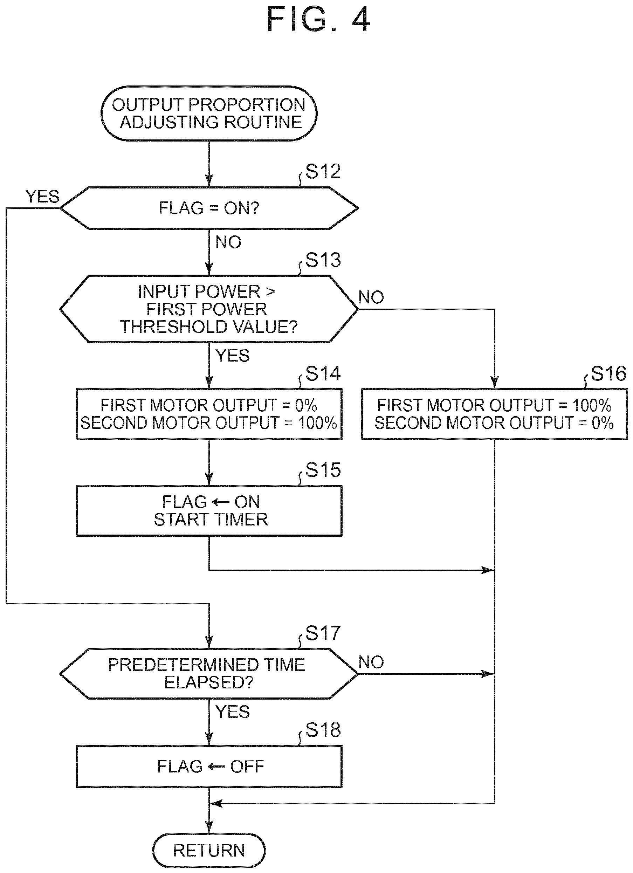

FIG. 4 shows a flowchart of an output proportion adjusting routine of a third embodiment. In the output proportion adjusting routine according to the third embodiment, the motor to be driven is switched between the first motor 7a and the second motor 7b. In other words, the controller 8 switches the electric vehicle 2 between a state in which the output proportion of the first motor 7a is 100%, and the output proportion of the second motor 7b is 0%, and a state in which the output proportion of the second motor 7b is 100%, and the output proportion of the first motor 7a is 0%. In the initial state, the output proportion of the first motor 7a is 100%, and the output proportion of the second motor 7b is 0%. In the output proportion adjusting routine of the third embodiment, a flag on software is used. The initial value of the flag is OFF. The flag is provided for preventing hunting in switching between the first motor 7a and the second motor 7b. The manner of using the flag will be described later.

The controller 8 regularly repeats the routine of the flowchart of FIG. 4. Initially, the controller 8 checks the flag (step S12). Since the initial value of the flag is OFF, the controller 8 executes step S13 (step S12: NO, step S13). In step S13, the controller 8 compares the input power to the boost converter 10 with a predetermined first power threshold value. The first power threshold value is the same as that in the case of FIG. 2.

When the input power exceeds the first power threshold value (step S13: YES), the controller 8 sets the output proportion of the first motor 7a to 0%, and sets the output proportion of the second motor 7b to 100% (step S14). Namely, the controller 8 switches the motor to be driven, from the first motor 7a to the second motor 7b. Then, the controller 8 sets the flag to ON, and starts a timer (step S15). Once the flag is set to ON, an affirmative decision (YES) is obtained in step S12 in the next cycle of the routine, and the operation to switch the motor to be driven, depending on the input power, is skipped (step S12: YES, step S17). The timer is provided for measuring time until when the flag is reset to OFF.

When the input power is smaller than the first power threshold value in step S13, the controller 8 sets the output proportion of the first motor 7a to 100%, and sets the output proportion of the second motor 7b to 0% (step S14). Namely, the controller 8 switches the motor to be driven, from the second motor 7b to the first motor 7a.

Once the flag is set to ON, the flag is kept ON until a predetermined time elapses (step S17: NO). Namely, once the motor to be driven is switched to the second motor 7b, the electric vehicle 2 keeps traveling with the second motor 7b being driven, while the first motor 7a is kept in a stopped state, until the predetermined time elapses. Thus, for the predetermined time, the reactor 14 is at rest, and is prevented from overheating.

When the predetermine time elapses from the time when the flag is set to ON, the flag is reset to OFF (step S17: YES, step S18), and a determination as to switching of the motor to be driven depending on the input power (steps S13, S14, S16) is made from the next cycle of the routine.

As a modified example of the third embodiment, the output proportion of the first motor 7a may be set to a value lower than 50% (the output proportion of the second motor 7b may be set to a value higher than 50%) in step S14, and the output proportion of the first motor 7a may be set to a value higher than 50% (the output proportion of the second motor 7b may be set to a value lower than 50%) in step S16. Namely, the controller may set the output proportion of the first motor 7a to a value higher than 50% when the input power is smaller than the first power threshold value, and may set the output proportion of the first motor 7a to a value lower than 50% when the input power exceeds the first power threshold value.

In the first embodiment to the third embodiment, the controller 8 adjusts the output proportions of the first motor 7a and the second motor 7b, based on the magnitude of the input power to the boost converter 10. The controller 8 may adjust the output proportions of the first motor 7a and the second motor 7b, based on the magnitude of input current flowing into the boost converter 10. In particular, where the output voltage of the battery 3 is substantially constant, the output current of the battery 3 is proportional to the output power of the battery 3; therefore, the controller 8 may use either one of the input power and the input current.

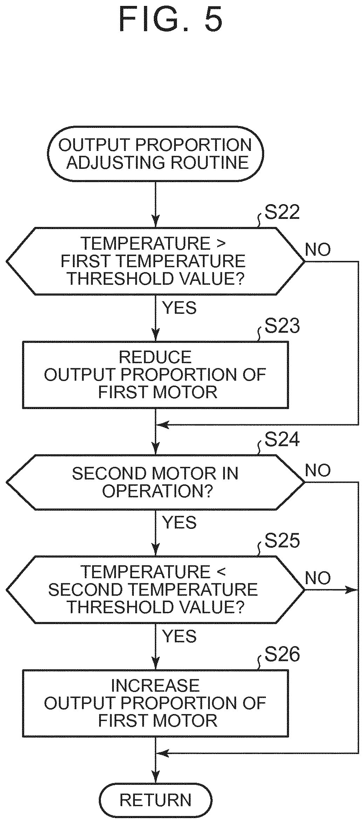

FIG. 5 shows a flowchart of an output proportion adjusting routine executed by the controller 8 in a fourth embodiment. In the first to third embodiments, the controller 8 adjusts the output proportions of the two motors 7a, 7b based on the magnitude of the input power to the boost converter 10. In the fourth embodiment, the controller 8 adjusts the output proportions of the two motors 7a, 7b based on the temperature of the reactor 14. As shown in FIG. 1, the electric vehicle 2 includes the temperature sensor 17 that measures the temperature of the reactor 14, and the controller 8 can detect the temperature of the reactor 14, based on sensor data of the temperature sensor 17.

When the temperature of the reactor 14 exceeds a first temperature threshold value (step S22: YES), the controller 8 reduces the output proportion of the first motor 7a (step S23). The controller 8 can reduce the output proportion of the first motor 7a, for example, by dropping the frequency of the output alternating current of the first inverter 6a. Reducing the output proportion of the first motor 7a is equivalent to increasing the output proportion of the second motor 7b. When the output proportion of the first motor 7a is reduced, the input power to the boost converter 10 is reduced, and heat generated by the boost converter 10 is reduced.

When the second motor 7b is in operation (step S24: YES), the controller 8 executes step S25. In step S25, the controller 8 compares the temperature of the reactor 14 with a predetermined second temperature threshold value. The second temperature threshold value is set to a lower value than the first temperature threshold value. When the temperature of the reactor 14 is lower than the second temperature threshold value (step S25: YES), the controller 8 increases the output proportion of the first motor 7a (step S26). The controller 8 can increase the output proportion of the first motor 7a, for example, by raising the frequency of the output alternating current of the first inverter 6a. Even when the output proportion of the first motor 7a is reduced through the operation of step S23, it can be returned to the original output proportion when the temperature of the reactor 14 is reduced, through execution of step S25 in the routine of FIG. 5 which is repeatedly executed. The routine of FIG. 5 is useful when the power loss of the first motor 7a is smaller than that of the second motor 7b.

The output proportion of the first motor 7a can also be reduced, by raising the frequency of the output alternating current of the second inverter 6b. Alternatively, the output proportion of the first motor 7a can be reduced, by reducing the boosting ratio of the boost converter 10. The second temperature threshold value is set to a value smaller than the first temperature threshold value, for the sake of prevention of hunting.

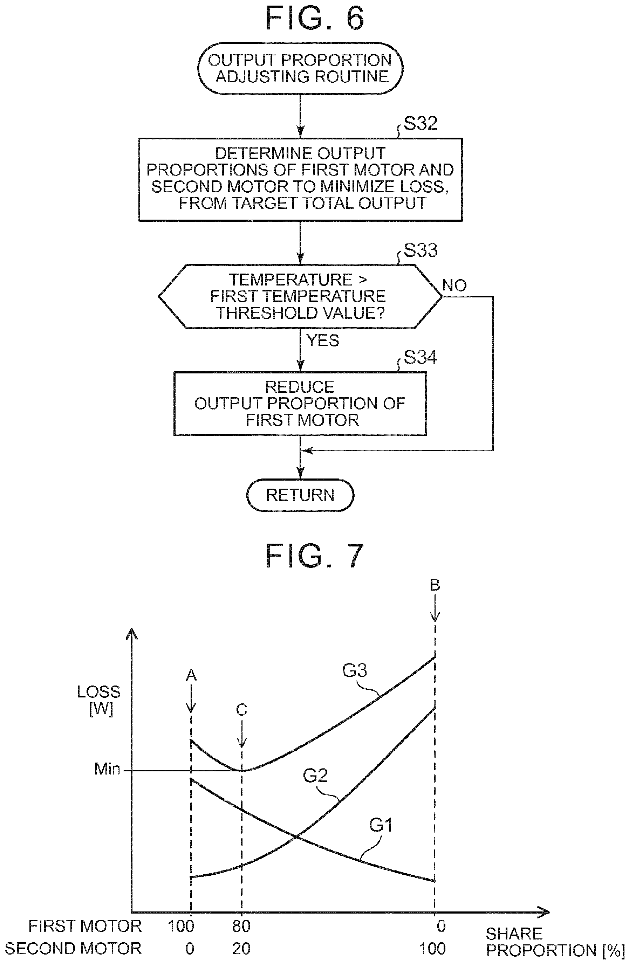

Referring to FIG. 6 and FIG. 7, an output proportion adjusting routine according to a fifth embodiment will be described. FIG. 6 shows a flowchart of the output proportion adjusting routine according to the fifth embodiment. In the fifth embodiment, the controller 8 determines the output proportions that minimize the power loss, from the target total output of the first motor 7a and the second motor 7b (step S42), and then adjusts the output proportions of the first and second motors 7a, 7b, according to the temperature of the reactor 14 (steps S43, S44).

As described above, the controller 8 of the electric vehicle 2 receives a command of the target total output of the first motor 7a and the second motor 7b, from a high-order controller (not shown). The controller 8 stores a loss map of the first motor 7a and the second motor 7b, for each magnitude of the target total output. One example of the loss map is shown in FIG. 7. The horizontal axis of the graph of FIG. 7 shows the output proportions of the first motor 7a and the second motor 7b. The proportion of the first motor 7a changes from 100% to 0% in a direction from point A to point B in the graph. The proportion of the second motor 7b changes from 0% to 100% in the direction from point A to point B in the graph. The sum of the proportion of the first motor 7a and the proportion of the second motor 7b is always 100%, which means that the sum of the output of the first motor 7a and the output of the second motor 7b is equal to the target total output.

The vertical axis of FIG. 7 indicates the loss of the motor. In the graph of FIG. 7, curve G1 indicates the loss of the first motor 7a, and curve G2 indicates the loss of the second motor 7b. Generally, the loss of the motor increases as the output of the motor increases. The curve G1 is negatively sloped, since the output (proportion) decreases from the left-hand side to the right-hand side on the horizontal axis associated with the first motor 7a.

Curve G3 indicates an addition of the curve G1 and curve G2. Namely, curve G3 indicates the sum of the loss of the first motor 7a and the loss of the second motor 7b. Point C, namely, a point at which the proportion of the first motor 7a is 80% (the proportion of the second motor 7b is 20%), indicates the proportions at which the total loss is at a minimum. As described above, the controller 8 stores a loss map as illustrated in FIG. 7 by way of example, for each magnitude of the target total output. The controller 8 refers to the loss map corresponding to the target total output received from the high-order controller, and determines the output proportions that minimize the total power loss of the first motor 7a and the second motor 7b (step S32 of FIG. 6).

Steps S33, S34 of FIG. 6 are identical with steps S22, S23 of FIG. 5. Namely, when the temperature of the reactor 14 is higher than the first temperature threshold value (step S33: YES), the controller 8 reduces the output proportion of the first motor 7a (step S34). According to the output proportion adjusting routine of the fifth embodiment, it is possible to avoid overheating of the boost converter 10, and also reduce the power loss.

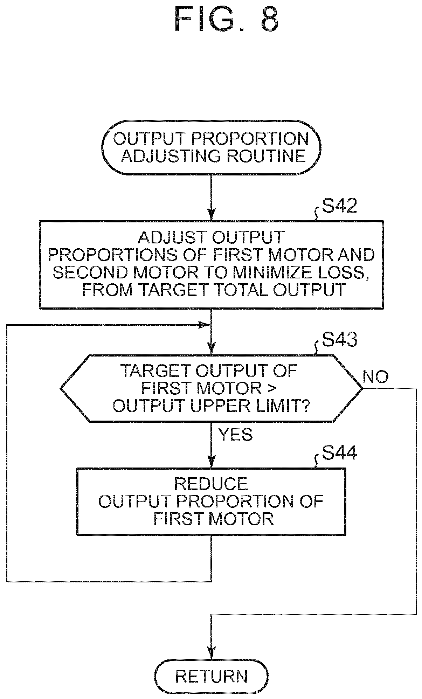

FIG. 8 shows a flowchart of an output proportion adjusting routine according to a sixth embodiment. In the sixth embodiment, the controller 8 determines the output proportions that minimize the power loss, from the target total output of the first motor 7a and the second motor 7b, and then adjusts the output proportions according to the target output of the first motor 7a. The output proportions that minimize the power loss are derived in the same manner as in the case of the fifth embodiment. Namely, the operation of step S42 of FIG. 8 is identical with that of step S32 of FIG. 6.

Then, the controller 8 compares the target output of the first motor 7a with the upper limit of the output of the first motor 7a (step S43). The target output of the first motor 7a is obtained from the target total output, and the output proportion of the first motor 7a. When the loss map of FIG. 7 shows the case where the target total output is equal to 80 kW, for example, the output proportion of the first motor 7a is 80%; therefore, the target output of the first motor 7a is expressed as: 80 kW × 80% = 64 kW. The controller 8 reduces the output proportion of the first motor 7a, so that the target output of the first motor 7a becomes smaller than the upper limit of the output of the first motor 7a (step S43: YES, step S44). After execution of the routine of FIG. 8, the controller 8 controls the boost converter 10, first inverter 6a, and second inverter 6b, so as to achieve the output proportions thus determined.

The target output of the first motor 7a is equivalent to the target value of the input power to the boost converter 10. Thus, the operations of steps S43, S44 of FIG. 8 have substantially the same technical meaning as those of steps S2, S3 of the flowchart of FIG. 2.

Some points of attention concerning the technologies described in connection with the embodiments will be stated. The characteristics of the electric vehicle 2 of the embodiments will be briefly summarized. The electric vehicle 2 includes a direct-current (DC) power supply (battery 3), the first motor 7a and second motor 7b for propelling the vehicle 2, the boost converter 10, the first inverter 6a and second inverter 6b, and the controller 8. The first inverter 6a supplies the AC power to the first motor 7a. The second inverter 6b supplies the AC power to the second motor 7b. The boost converter 10, which is connected between the DC power supply (battery 3) and the first inverter 6a (the first motor 7a), raises the output voltage of the DC power supply, and supplies it to the first inverter 6a. The second inverter 6b (the second motor 7b) uses electric power of the DC power supply, without raising its voltage. The controller 8 adjusts a first output proportion of the first motor 7a and a second output proportion of the second motor 7b. When a load index (e.g., input power) representing the load of the boost converter 10 exceeds a predetermined threshold value, the controller 8 reduces the first output proportion of the first motor 7a, as compared with the case where the load index is smaller than the threshold value.

In the first embodiment to the third embodiment, the controller 8 adjusts the output proportions of the motors, based on the magnitude of the input power to the boost converter 10. In the fourth and fifth embodiments, the controller 8 adjusts the output proportions of the motors, based on the temperature of the reactor. In the sixth embodiment, the controller 8 adjusts the output proportions of the motors based on the target output of the first motor 7a. Here, any of the input power to the boost converter 10, the temperature of the reactor 14, and the target output of the first motor 7a are the examples of the load index of the boost converter 10. In this connection, the temperature of the switching devices 15a, 15b included in the boost converter 10 may be selected as the load index, in place of the reactor 14.

The electric vehicle 2 of the embodiments includes the first motor 7a that drives the front wheels, and the second motor 7b that drives the rear wheels. The technologies disclosed in this specification may also be applied to an electric vehicle in which output torques of two motors are combined, to drive the front wheels or the rear wheels.

The technologies disclosed in this specification are also preferably applied to an electric vehicle including a fuel cell as a DC power supply. When the fuel cell is employed as the DC power supply, the boost converter 10 of FIG. 1 is not required to be equipped with the switching device 15a involved in step-down operation to reduce the voltage. The technologies disclosed in this specification are also preferably applied to a hybrid vehicle including two motors and an engine for propelling the vehicle.

While specific examples of the invention have been described in detail, these examples are for illustrative purposes only, and are not intended to limit the claims. The technologies described in the claims include variously modified ones of the illustrated specific examples. The technical elements described in this specification or the drawings exhibit technical utilities when used alone or in various combinations, and are not limited to the combinations described in the claims as filed. The technologies illustrated in this specification or the drawings can achieve two or more objects at the same time, and have technical utilities merely by accomplishing one of the objects.

## Claims

1. An electric vehicle comprising:
a first motor (7a) for propelling the electric vehicle;
a direct-current power supply (3);
a boost converter (10) configured to raise an output voltage of the direct-current power supply (3), the boost converter (10) being connected between the direct-current power supply (3) and the first motor (7a);
a second motor (7b) for propelling the electric vehicle, the second motor (7b) being driven with electric power of the direct-current power supply (3) without raising the output voltage of the direct-current power supply (3); and
a controller (8) configured to adjust a first output proportion and a second output proportion, the first output proportion being an output proportion of the first motor (7a), the second output proportion being the an output proportion of the second motor (7b), and the controller (8) being configured to reduce the first output proportion of the first motor (7a) when a load index exceeds a predetermined threshold value, as compared with a case where the load index representing a load of the boost converter is smaller than the threshold value.

2. The electric vehicle according to claim 1, wherein the load index is one of an input power to the boost converter (10), an input current to the boost converter (10), and a temperature of a given component that constitutes the boost converter (10).

3. The electric vehicle according to claim 1 or 2, wherein the controller (8) is configured to determine the first output proportion and the second output proportion which minimize a power loss, and then adjust the first output proportion and the second output proportion according to the load index, the first output proportion and the second output proportion being determined from a target total output of the first motor (7a) and the second motor (7b).

4. The electric vehicle according to any one of claims 1 to 3, wherein the controller (8) is configured to set the first output proportion of the first motor (7a) to a value lower than 50%, when the load index exceeds the threshold value.

5. The electric vehicle according to claim 4, wherein the controller (8) is configured to set the first output proportion of the first motor (7a) to 0%, when the load index exceeds the threshold value.
